# EUROPEAN PATENT APPLICATION

(11) **EP 4 803 344 A1**
(43) Date of publication of application: **09.09.2026**
(21) Application number: 25766868.1
(22) Date of filing: 13.05.2025
(51) Int. Cl.: B60K 37/10, B60K 35/53

(54) **INSTRUMENT PANEL ASSEMBLY ADJUSTMENT DEVICE, INSTRUMENT PANEL ASSEMBLY AND VEHICLE**

(30) Priority: 14.01.2025 CN 202520084028 U
(71) Applicant: Zhengzhou Senpeng Electronics Technology Co., Ltd., Zhengzhou Hi-Tech Industrial Development Zone Zhengzhou, Henan 450001 (CN)
(72) Inventor: DONG, Shesen, Zhengzhou, Henan 450001 (CN); DING, Junlei, Zhengzhou, Henan 450001 (CN); DENG, Shuaiqiang, Zhengzhou, Henan 450001 (CN); LIU, Ligui, Zhengzhou, Henan 450001 (CN); PANG, Chaowei, Zhengzhou, Henan 450001 (CN)
(74) Representative: Gulde & Partner
(86) International application number: PCT/CN2025/094461
(87) International publication number: WO 2026/152597

(57) **Abstract**

This application belongs to the field of vehicle technologies, and provides an adjustment apparatus for a dashboard assembly, a dashboard assembly, and a vehicle. The adjustment apparatus for a dashboard assembly includes a base fixed to a vehicle body, a connecting bracket connecting a dashboard and a directional tubular column, and a linkage bracket connected to the connecting bracket and moving up and down together with the connecting bracket. The base includes two guide plates, namely, a left guide plate and a right guide plate. The linkage bracket is hingedly connected to left and right sides of the connecting bracket by using a hinged part. The linkage bracket has a left side surface disposed opposite to the left guide plate and a right side surface disposed opposite to the right guide plate. Guiding fit structures that perform guiding fit along an up-down direction are respectively disposed between the left side surface of the linkage bracket and the left guide plate and between the right side surface of the linkage bracket and the right guide plate. In this application, a position of guiding fit between the linkage bracket and the guide plate is changed to be set between opposite side surfaces of the linkage bracket and the guide plate, so that the guide plate does not need to be provided with a slotted hole, thereby resolving a problem that the slotted hole is easily worn down and a guide effect is affected.

## Description

### TECHNICAL FIELD

This application belongs to the field of vehicle technologies, and relates to an adjustment apparatus for a dashboard assembly, the dashboard assembly, and a vehicle.

### BACKGROUND

Comfort of a driving area is related to occupational health of a driver, and is very important for a bus. Currently, buses with domestic mainstream configuration all have an adjustment structure for a dashboard assembly. By adjusting upper and lower heights and front and rear angles of the dashboard assembly, all drivers with different heights and body shapes can carry out driving activities in a healthy and comfortable posture.

For example, the Chinese utility model patent with the authorization publication number No. CN221562807U discloses an adjustment structure for a dashboard assembly and a vehicle. The adjustment structure for a dashboard assembly includes a base fixedly connected to a vehicle body, a connecting bracket connecting a dashboard and a directional tubular column, and a linkage bracket connected to the connecting bracket and moving up and down with the connecting bracket. A height adjustment drive mechanism used to drive the connecting bracket to move up and down is mounted between the base and the connecting bracket, and an angle adjustment drive mechanism used to drive the connecting bracket to swing back and forth around a connection position between the connecting bracket and the height adjustment drive mechanism is connected between the connecting bracket and the linkage bracket. During use, under control of the height adjustment drive mechanism, the connecting bracket and the linkage bracket move up and down to adjust heights of the dashboard and a steering wheel, and the angle adjustment drive mechanism moves up and down with the connecting bracket and the linkage bracket. After the connecting bracket moves to a target height position, the angle adjustment drive mechanism is started to drive the connecting bracket to swing back and forth around the connection position between the connecting bracket and the height adjustment drive mechanism to adjust front and rear angles of the dashboard and the steering wheel.

In the foregoing patent, in order to guide the up-and-down movement of the linkage bracket, three slotted holes extending up and down are provided on each of left and right base side walls (that is, guide plates) of the base. A first connecting shaft and a third connecting shaft between the connecting bracket and the linkage bracket and a second connecting shaft between the linkage bracket and the angle adjustment drive mechanism respectively extend through corresponding slotted holes and are fit with the slotted holes in an up-down guiding manner. Each of the first connecting shaft, the second connecting shaft, and the third connecting shaft uses a bolt. Because the bolt is directly in sliding contact with a corresponding slotted hole, friction force is relatively strong, and the slotted hole is worn down over time. Consequently, a guide effect is affected.

### SUMMARY

An objective of this application is to provide an adjustment apparatus for a dashboard assembly, to resolve problems in an existing technology that a slotted hole is easily worn down and a guide effect is affected because a linkage bracket is guided by means of direct contact and fit between a connecting shaft and the slotted hole. An objective of this application is further to provide a dashboard assembly and a vehicle, to resolve the foregoing problem.

To achieve the foregoing objectives, the adjustment apparatus for a dashboard assembly in this application uses the following technical solution:
An adjustment apparatus for a dashboard assembly includes a base fixed to a vehicle body, a connecting bracket connecting a dashboard and a directional tubular column, and a linkage bracket connected to the connecting bracket and moving up and down together with the connecting bracket, where the base includes two guide plates, namely, a left guide plate and a right guide plate, the linkage bracket is hingedly connected to left and right sides of the connecting bracket by using a hinged part, the linkage bracket has a left side surface disposed opposite to the left guide plate and a right side surface disposed opposite to the right guide plate, and guiding fit structures that perform guiding fit along an up-down direction are respectively disposed between the left side surface of the linkage bracket and the left guide plate and between the right side surface of the linkage bracket and the right guide plate.

Beneficial effects of the foregoing technical solution are as follows: This application belongs to an invention of a change in an element relationship, and a position of guiding fit between the linkage bracket and the guide plate is changed. Originally, a slotted hole is provided on the guide plate, and the linkage bracket is guided by using a connecting shaft extending through the slotted hole and the linkage bracket. The present application is changed as follows: The linkage bracket has the left side surface disposed opposite to the left guide plate and the right side surface disposed opposite to the right guide plate. The guiding fit structures that perform guiding fit along an up-down direction are respectively disposed between the left side surface of the linkage bracket and the left guide plate and between the right side surface of the linkage bracket and the right guide plate. That is, the position of guiding fit is instead set between opposite side surfaces of the linkage bracket and the guide plate. In this case, the guide plate does not need to be provided with the slotted hole, thereby resolving problems that the slotted hole is easily worn down and a guide effect is affected.

Further, the guiding fit structure is a rolling guiding fit structure.

Further, the rolling guiding fit structure includes ball slots respectively disposed on the guide plate and the linkage bracket, and balls disposed in the ball slots.

Further, slot depths of the ball slots on the linkage bracket and the guide plate are equal, and slot widths are also equal.

Further, at least two balls are disposed in the ball slots on the linkage bracket and the guide plate.

Further, the hinged part includes a bolt extending through the guide plate, the connecting bracket, and the linkage bracket, and a guide socket sleeved on an outer portion of the bolt, a through hole through which the bolt extends, on the guide plate, is a slotted hole extending up and down, and the guide socket is fit with a hole wall of the slotted hole in a contact manner.

Further, the guide socket includes a rectangular segment whose outer contour cross section is rectangular and a circular segment whose outer contour cross section is circular, the circular segment is connected to the rectangular segment, and two side surfaces that face away from each other and that are of the rectangular segment are fit with two opposite hole walls of the slotted hole in a contact manner; the connecting bracket includes two connecting arms, namely, a left connecting arm and a right connecting arm hingedly connected to the linkage bracket, the two connecting arms and the linkage bracket are all located between the two guide plates, a settlement slot whose slot width is greater than a width of the slotted hole is provided at an opening of the slotted hole on an outer side surface of the guide plate, and the circular segment is located in the settlement slot and is fit with, in a stopping manner, a head of the bolt or a washer sleeved on the bolt.

To achieve the foregoing objectives, a dashboard assembly in this application uses the following technical solution:
A dashboard assembly includes a dashboard, a directional tubular column, and an adjustment apparatus configured to adjust heights and front and rear angles of the dashboard and the directional tubular column. The adjustment apparatus includes a base fixed to a vehicle body, a connecting bracket connecting the dashboard and the directional tubular column, and a linkage bracket connected to the connecting bracket and moving up and down together with the connecting bracket. The base includes two guide plates, namely, a left guide plate and a right guide plate, the linkage bracket is hingedly connected to left and right sides of the connecting bracket by using a hinged part, the linkage bracket has a left side surface disposed opposite to the left guide plate and a right side surface disposed opposite to the right guide plate, and guiding fit structures that perform guiding fit along an up-down direction are respectively disposed between the left side surface of the linkage bracket and the left guide plate and between the right side surface of the linkage bracket and the right guide plate.

Beneficial effects of the foregoing technical solution are as follows: This application belongs to an improved invention, and further defines the adjustment apparatus. A position of guiding fit between the linkage bracket and the guide plate in the adjustment apparatus is changed. Originally, a slotted hole is provided on the guide plate, and the linkage bracket is guided by using a connecting shaft extending through the slotted hole and the linkage bracket. The present application is changed as follows: The linkage bracket has the left side surface disposed opposite to the left guide plate and the right side surface disposed opposite to the right guide plate. The guiding fit structures that perform guiding fit along an up-down direction are respectively disposed between the left side surface of the linkage bracket and the left guide plate and between the right side surface of the linkage bracket and the right guide plate. That is, the position of guiding fit is instead set between opposite side surfaces of the linkage bracket and the guide plate. In this case, the guide plate does not need to be provided with the slotted hole, thereby resolving a problem that the slotted hole is easily worn down and a guide effect is affected.

Further, the guiding fit structure is a rolling guiding fit structure.

Further, the rolling guiding fit structure includes ball slots respectively disposed on the guide plate and the linkage bracket, and balls disposed in the ball slots.

Further, slot depths of the ball slots on the linkage bracket and the guide plate are equal, and slot widths are also equal.

Further, at least two balls are disposed in the ball slots on the linkage bracket and the guide plate.

Further, the hinged part includes a bolt extending through the guide plate, the connecting bracket, and the linkage bracket, and a guide socket sleeved on an outer portion of the bolt, a through hole through which the bolt extends, on the guide plate, is a slotted hole extending up and down, and the guide socket is fit with a hole wall of the slotted hole in a contact manner.

Further, the guide socket includes a rectangular segment whose outer contour cross section is rectangular and a circular segment whose outer contour cross section is circular, the circular segment is connected to the rectangular segment, and two side surfaces that face away from each other and that are of the rectangular segment are fit with two opposite hole walls of the slotted hole in a contact manner; and the connecting bracket includes two connecting arms, namely, a left connecting arm and a right connecting arm hingedly connected to the linkage bracket, the two connecting arms and the linkage bracket are all located between the two guide plates, a settlement slot whose slot width is greater than a width of the slotted hole is provided at an opening of the slotted hole on an outer side surface of the guide plate, and the circular segment is located in the settlement slot and is fit with, in a stopping manner, a head of the bolt or a washer sleeved on the bolt.

To achieve the foregoing objectives, a vehicle in this application uses the following technical solutions:
A vehicle includes a vehicle body and a dashboard assembly mounted on the vehicle body. The dashboard assembly includes a dashboard, a directional tubular column, and an adjustment apparatus configured to adjust heights and front and rear angles of the dashboard and the directional tubular column. The adjustment apparatus includes a base fixed to the vehicle body, a connecting bracket connecting the dashboard and the directional tubular column, and a linkage bracket connected to the connecting bracket and moving up and down together with the connecting bracket. The base includes two guide plates, namely, a left guide plate and a right guide plate, the linkage bracket is hingedly connected to left and right sides of the connecting bracket by using a hinged part, and the linkage bracket has a left side surface disposed opposite to the left guide plate and a right side surface disposed opposite to the right guide plate. Guiding fit structures that perform guiding fit along an up-down direction are respectively disposed between the left side surface of the linkage bracket and the left guide plate and between the right side surface of the linkage bracket and the right guide plate.

Beneficial effects of the foregoing technical solution are as follows: This application belongs to an improved invention, and further defines the adjustment apparatus. A position of guiding fit between the linkage bracket and the guide plate in the adjustment apparatus is changed. Originally, a slotted hole is provided on the guide plate, and the linkage bracket is guided by using a connecting shaft extending through the slotted hole and the linkage bracket. The present application is changed as follows: The linkage bracket has the left side surface disposed opposite to the left guide plate and the right side surface disposed opposite to the right guide plate. The guiding fit structures that perform guiding fit along an up-down direction are respectively disposed between the left side surface of the linkage bracket and the left guide plate and between the right side surface of the linkage bracket and the right guide plate. That is, a position of guiding fit is instead set between opposite side surfaces of the linkage bracket and the guide plate. In this case, the guide plate does not need to be provided with the slotted hole, thereby resolving a problem that the slotted hole is easily worn down and a guide effect is affected.

Further, the guiding fit structure is a rolling guiding fit structure.

Further, the rolling guiding fit structure includes ball slots respectively disposed on the guide plate and the linkage bracket, and balls disposed in the ball slots.

Further, slot depths of the ball slots on the linkage bracket and the guide plate are equal, and slot widths are also equal.

Further, at least two balls are disposed in the ball slots on the linkage bracket and the guide plate.

Further, the hinged part includes a bolt extending through the guide plate, the connecting bracket, and the linkage bracket, and a guide socket sleeved on an outer portion of the bolt, a through hole through which the bolt extends, on the guide plate, is a slotted hole extending up and down, and the guide socket is fit with a hole wall of the slotted hole in a contact manner.

Further, the guide socket includes a rectangular segment whose outer contour cross section is rectangular and a circular segment whose outer contour cross section is circular, the circular segment is connected to the rectangular segment, and two side surfaces that face away from each other and that are of the rectangular segment are fit with two opposite hole walls of the slotted hole in a contact manner; and the connecting bracket includes two connecting arms, namely, a left connecting arm and a right connecting arm hingedly connected to the linkage bracket, the two connecting arms and the linkage bracket are all located between the two guide plates, a settlement slot whose slot width is greater than a width of the slotted hole is provided at an opening of the slotted hole on an outer side surface of the guide plate, and the circular segment is located in the settlement slot and is fit with, in a stopping manner, a head of the bolt or a washer sleeved on the bolt.

### BRIEF DESCRIPTION OF THE DRAWINGS

FIG. 1 is a three-dimensional diagram from a perspective of Embodiment 1 of an adjustment apparatus for a dashboard assembly according to this application;
FIG. 2 is a rear view of Embodiment 1 of an adjustment apparatus for a dashboard assembly according to this application;
FIG. 3 is a left view of Embodiment 1 of an adjustment apparatus for a dashboard assembly according to this application;
FIG. 4 is a left cross-sectional view of Embodiment 1 of an adjustment apparatus for a dashboard assembly (a cross-sectional surface passes through a second ball slot on a fixing base on a left side) according to this application;
FIG. 5 is a three-dimensional diagram (a fixing base on a left side is not shown) from another perspective of Embodiment 1 of an adjustment apparatus for a dashboard assembly according to this application;
FIG. 6 is a cross-sectional view of a linkage bracket and two fixing bases in Embodiment 1 of an adjustment apparatus for a dashboard assembly according to this application;
FIG. 7 is a three-dimensional diagram of a guide socket in Embodiment 1 of an adjustment apparatus for a dashboard assembly according to this application;
FIG. 8 is a three-dimensional diagram of a linkage bracket in Embodiment 1 of an adjustment apparatus for a dashboard assembly according to this application;
FIG. 9 is a three-dimensional diagram from a perspective of a fixing base in Embodiment 1 of an adjustment apparatus for a dashboard assembly according to this application; and
FIG. 10 is a three-dimensional diagram from another perspective of a fixing base in Embodiment 1 of an adjustment apparatus for a dashboard assembly according to this application.

In the figures: 1. substrate; 1-1. first bent plate; 1-2. second bent plate; 2. fixing base; 2-1. guide plate; 2-2. second slotted hole; 2-3. second ball slot; 2-4. second protrusion; 2-5. settlement slot; 3. tubular column connecting bracket; 3-1. connecting arm; 3-2. connecting cylinder; 3-3. connecting plate; 4. dashboard connecting bracket; 4-1. first bracket plate; 4-2. second bracket plate; 4-3. dynamic locking plate; 4-4. mounting plate; 5. linkage bracket; 5-1. linkage plate; 5-2. linkage side wall; 5-3. hinged arm; 5-4. protrusion block; 5-5. hinged base; 5-6. first ball slot; 5-7. first protrusion; 6. second rotating block; 7. second clamping block; 8. first rotating block; 9. first clamping block; 10. height adjustment motor; 11. static locking plate; 11-1. first slotted hole; 12. angle adjustment motor; 13. angle adjustment screw; 14. directional tubular column; 15. mounting shaft; 16. air cylinder; 17. first pushing socket; 18. pad; 19. fixing nut; 20. second pushing socket; 21. adjustment nut; 22. locking nut; 23. crossbeam; 24. bolt; 25. guide socket; 25-1. rectangular segment; 25-2. circular segment; 26. ball; 27. first mounting seat; 28. first pin; 29. second mounting seat; 30. second pin; 31. height adjustment screw.

### DETAILED DESCRIPTION

For technical problems existing in an existing technology, a basic idea of this application is that a position of guiding fit between a linkage bracket and a guide plate is changed to be set between opposite side surfaces of the linkage bracket and the guide plate, so that the guide plate does not need to be provided with a slotted hole, thereby resolving problems that the slotted hole is easily worn down and a guide effect is affected.

The following further describes features and performance of this application in detail with reference to embodiments.

Embodiment 1 of an adjustment apparatus for a dashboard assembly in this application:

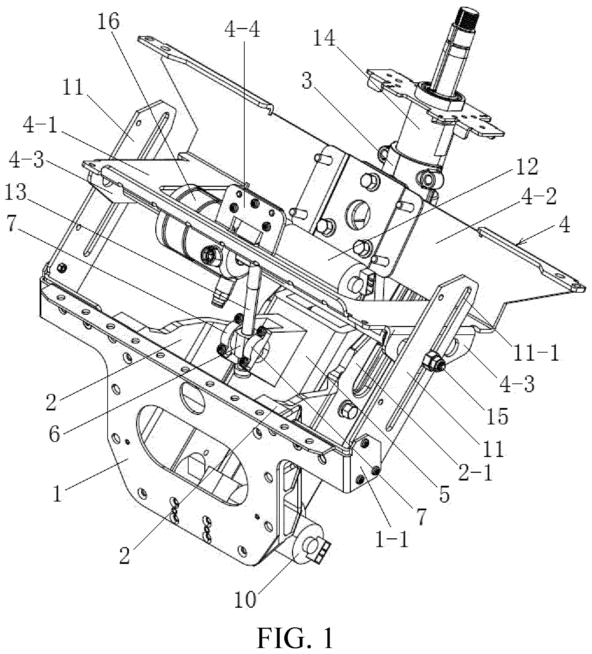

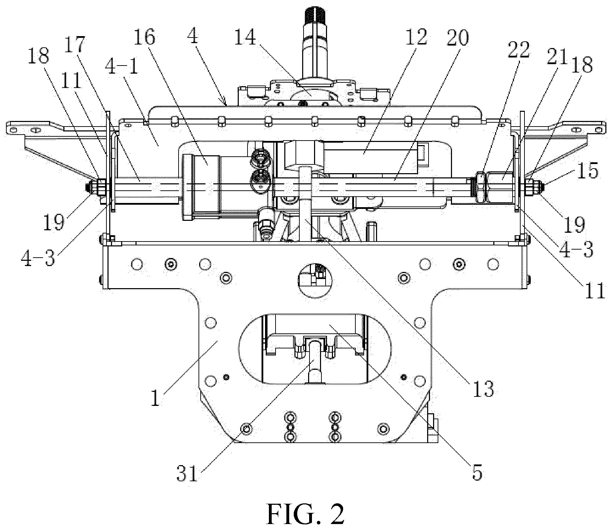

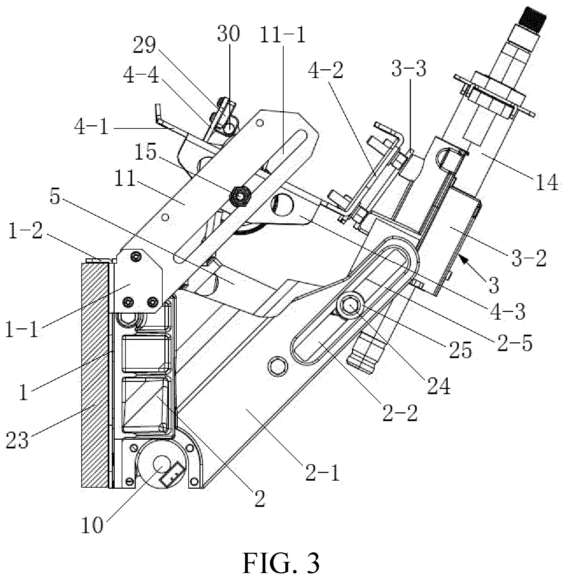

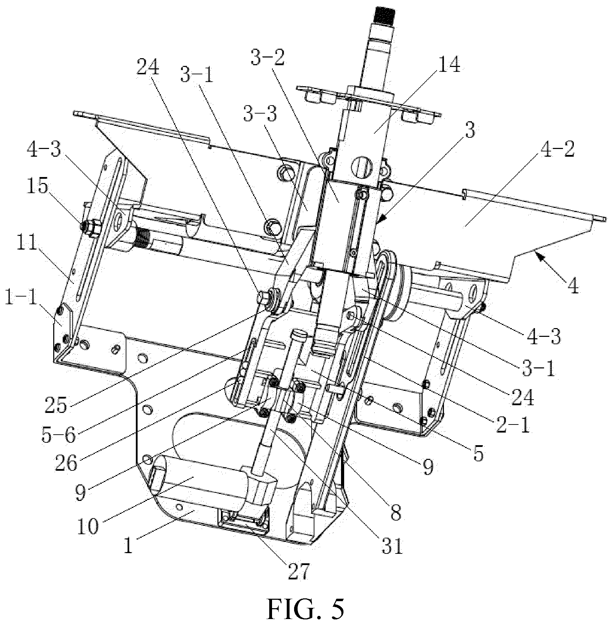

As shown in FIG. 1, FIG. 2, FIG. 3, FIG. 4, and FIG. 5, the adjustment apparatus for a dashboard assembly includes a base fixedly connected to a vehicle body and a connecting bracket connecting a dashboard and a directional tubular column 14. The base includes a substrate 1 and two fixing bases 2, namely, a left fixing base and a right fixing base fixed on the substrate 1. Each of the two fixing bases 2 includes a guide plate 2-1, and two guide plates 2-1 are disposed in parallel on left and right sides. A connection structure fixedly connected to the vehicle body is disposed on the substrate 1. The connection structure is specifically a second bent plate 1-2. The substrate 1 is fixedly connected to a crossbeam 23 (shown in FIG. 3) in front of a vehicle cab by using the second bent plate 1-2.

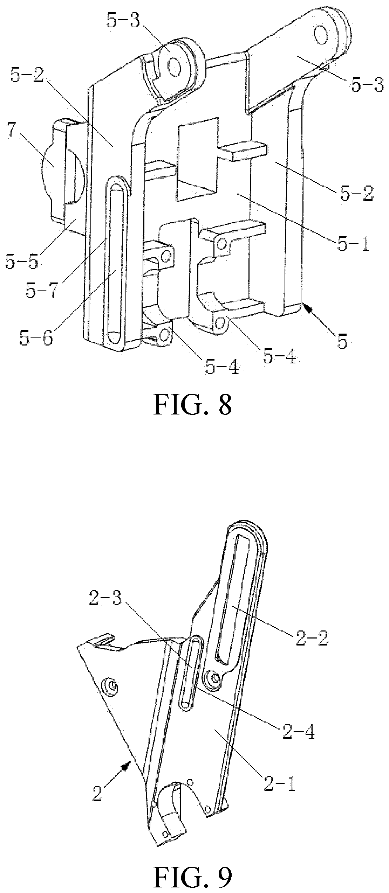

The connecting bracket includes a tubular column connecting bracket 3 connected to the directional tubular column 14 and a dashboard connecting bracket 4 connected to the dashboard, and the tubular column connecting bracket 3 is located on a rear side of the dashboard connecting bracket 4 and is fixed to the dashboard connecting bracket 4. The tubular column connecting bracket 3 includes two connecting arms 3-1, namely, a left connecting arm and a right connecting arm, and further includes a connecting cylinder 3-2 connected to the directional tubular column 14 and a connecting plate 3-3 connected to the dashboard connecting bracket 4. The two connecting arms 3-1 are located between the two guide plates 2-1, and a linkage bracket 5 is further disposed between the two guide plates 2-1. The linkage bracket 5 is hingedly connected to the tubular column connecting bracket 3. A height adjustment drive mechanism used to drive the linkage bracket 5, the tubular column connecting bracket 3, and the dashboard connecting bracket 4 to move up and down together is connected between the linkage bracket 5 and the base. As shown in FIG. 8, the linkage bracket 5 includes a linkage plate 5-1 and linkage side walls 5-2 connected to left and right sides of the linkage plate 5-1, hinged arms 5-3 are respectively disposed on the two linkage side walls 5-2, and the two hinged arms 5-3 are respectively hingedly connected to the two connecting arms 3-1 by using hinged parts.

The linkage bracket 5 has a left side surface disposed opposite to the left guide plate 2-1 and a right side surface disposed opposite to the right guide plate 2-1, and guiding fit structures that perform guiding fit along an up-down direction are respectively disposed between the left side surface of the linkage bracket 5 and the left guide plate 2-1 and between the right side surface of the linkage bracket 5 and the right guide plate 2-1. Therefore, a position of guiding fit between the linkage bracket 5 and the guide plate 2-1 is changed. Originally, a slotted hole is provided on the guide plate, and the linkage bracket is guided by using a connecting shaft extending through the slotted hole and the linkage bracket. The present application is changed as follows: Guiding is performed by disposing the guiding fit structure between opposite side surfaces of the linkage bracket and the guide plate. In this case, the guide plate does not need to be provided with the slotted hole, thereby resolving problems that the slotted hole is easily worn down and a guide effect is affected.

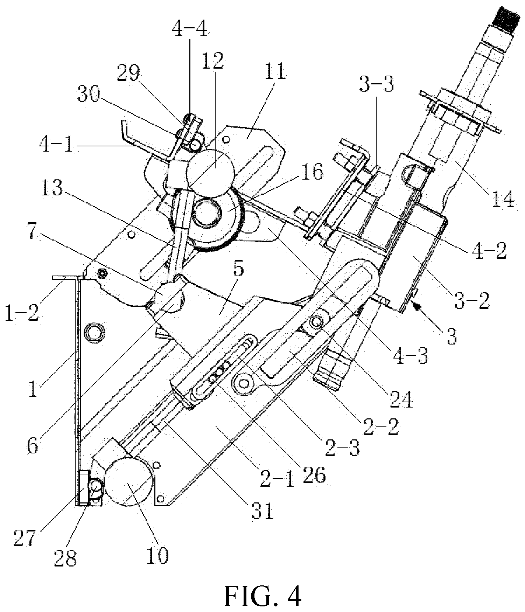

Further, the guiding fit structure is a rolling guiding fit structure. In this case, friction force is weaker, movement is smoother, and configuration of the height adjustment drive mechanism can be reduced. Specifically, as shown in FIG. 4, FIG. 5, FIG. 6, FIG. 8, FIG. 9, and FIG. 10, the guiding fit structure includes a first ball slot 5-6 disposed on each linkage side wall 5-2, with each first ball slot extending vertically and being closed at both its upper end and lower end, and further includes a second ball slot 2-3 disposed on each guide plate 2-1, with each second ball slot extending vertically and being closed at both its upper end and lower end. First ball slots 5-6 and second ball slots 2-3 on two sides are all provided oppositely. A ball 26 fit with a width of the slot is disposed in the ball slot, and a sum of slot depths of the first ball slots 5-6 and the second ball slots 2-3 is equal to a diameter of balls 26. In this way, not only up-down guiding between the linkage bracket 5 and the guide plate 2-1 can be implemented, but also friction force during relative movement of the two can be reduced. In addition, an extreme position of up-down motion of the linkage bracket 5 can also be determined.

Further, slot depths and slot widths of the first ball slots 5-6 and the second ball slots 2-3 are respectively equal, thereby facilitating processing of the ball slots and mounting of the balls 26. In addition, at least two balls 26 are disposed in a single-side ball slot, and there are three balls 26 in this embodiment. This is to consider that the first ball slot 5-6 and the second ball slot 2-3 do not extend vertically up and down, but extend obliquely up and down. After the linkage bracket 5, the tubular column connecting bracket 3, and the dashboard connecting bracket 4 are adjusted in place, weights of the linkage bracket 5, the tubular column connecting bracket 3, and the dashboard connecting bracket 4 act on a slot wall of the ball slot by using the ball 26. Therefore, a supporting effect may be improved by increasing a quantity of balls 26, but the quantity is not to be excessively large; otherwise, travel of the linkage bracket 5 moving up and down will be affected.

In addition, as shown in FIG. 8, a first protrusion 5-7 is disposed on an outer side surface of each linkage side wall 5-2, and the foregoing first ball slot 5-6 is disposed at a position of the first protrusion 5-7, so as to avoid that too many first ball slots 5-6 are disposed to reduce a wall thickness of the linkage side wall 5-2. In addition, as shown in FIG. 9, a second protrusion 2-4 is disposed on an inner side surface of each guide plates 2-1, and the foregoing second ball slot 2-3 is disposed at a position of the second protrusion 2-4, so as to avoid that too many second ball slots 2-3 are disposed to reduce a wall thickness of the guide plate 2-1.

As shown in FIG. 3 to FIG. 6, the foregoing hinged part includes a hinged shaft that extends through the guide plate 2-1, the connecting arm 3-1, and the hinged arm 5-3, and a guide socket 25 sleeved on the hinged shaft. In this embodiment, a bolt 24 is used as the hinged shaft. Through holes on the guide plate 2-1 and the connecting arm 3-1 are unthreaded holes, and a through hole on the hinged arm 5-3 is a threaded hole. The bolt 24 is fit with the threaded hole on the hinged arm 5-3. In this way, assembly is relatively convenient. Certainly, in other embodiments, all through holes on the guide plate 2-1, the connecting arm 3-1, and the hinged arm 5-3 may be unthreaded holes. After the bolt 24 extends through the three, a nut is then mounted.

The through hole through which the bolt 24 extends, on the guide plate 2-1, is a second slotted hole 2-2 extending up and down, and the guide socket 25 is fit with a hole wall of the second slotted hole 2-2 in a contact manner, thereby avoiding wear of the hole wall caused by direct contact between the bolt 24 and the hole wall of the second slotted hole 2-2. It should be noted that two columns of balls 26 on the left side and the right side of the linkage bracket 5 actually already guide up-and-down movement of the linkage bracket 5. However, because the hinged part between the linkage bracket 5 and the tubular column connecting bracket 3 extends through the guide plate 2-1, the guide plate 2-1 needs to be provided with the through hole. In addition, to ensure the up-and-down movement of the linkage bracket 5 and the tubular column connecting bracket 3 is not affected, the through hole needs to be a slotted hole. Therefore, a most basic function of the slotted hole is to avoid the hinged part, and it is completely feasible that the hinged part is not fit with the slotted hole in a guiding manner.

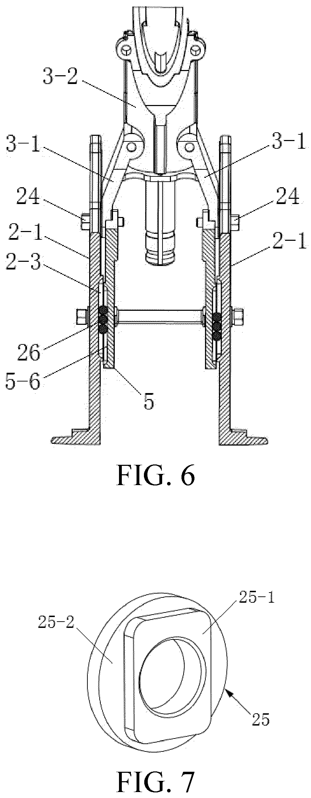

However, in this embodiment, to strengthen a guide function, the guide socket 25 is fit with the second slotted hole 2-2 in a guiding manner. Specifically, as shown in FIG. 7, the guide socket 25 includes a rectangular segment 25-1 whose outer contour cross section is rectangular. Two side surfaces that face away from each other and that are of the rectangular segment 25-1 are fit with two opposite hole walls of the second slotted hole 2-2 in a contact manner, and a contact area is larger. This is to consider that the second slotted hole 2-2 does not extend vertically up and down, but extends obliquely up and down. After the linkage bracket 5, the tubular column connecting bracket 3, and the dashboard connecting bracket 4 are adjusted in place, weights of the linkage bracket 5, the tubular column connecting bracket 3, and the dashboard connecting bracket 4 act on the hole wall of the second slotted hole 2-2 through the guide socket 25. Therefore, selecting surface-to-surface contact between the guide socket 25 and the hole wall of the second slotted hole 2-2 can increase a supporting area, thereby facilitating stable supporting.

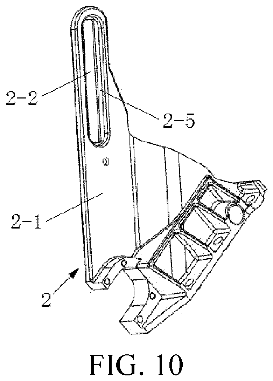

The guide socket 25 further includes a circular segment 25-2 whose outer contour cross section is circular, and the circular segment 25-2 is connected to the rectangular segment 25-1. As shown in FIG. 3 and FIG. 10, a settlement slot 2-5 whose slot width is greater than a width of the second slotted hole 2-2 is provided at an opening of the second slotted hole 2-2 on an outer side surface of the guide plate 2-1, and the circular segment 25-2 is located in the settlement slot 2-5 and is fit with, in a stopping manner, a washer sleeved on the bolt 24. In this way, the guide socket 25 can be positioned, thereby facilitating mounting of the guide socket 25. Certainly, in other embodiments, no washer may be disposed on the bolt 24. In this case, the circular segment 25-2 is directly fit with a head of the bolt 24 in a stopping manner.

As shown in FIG. 1 to FIG. 5, the foregoing height adjustment drive mechanism includes a height adjustment motor 10 hingedly connected to the substrate 1 and a height adjustment screw 31 that is driven by the height adjustment motor 10 to rotate. A first mounting seat 27 is fixed on the substrate 1, and the height adjustment motor 10 is hingedly connected to the first mounting seat 27 by using a first pin 28. A rotatable first rotating block 8 is mounted at a middle portion of the linkage bracket 5 in a left-right direction, the height adjustment screw 31 extends through the first rotating block 8 and is threadedly fit with the first rotating block 8, and a rotating axis of the first rotating block 8 and a hinged axis (that is, an axis of the first pin 28) of the height adjustment motor 10 both extend along a left-right direction.

The first rotating block 8 includes a first connecting portion and first mounting portions located at left and right ends of the first connecting portion. A first threaded hole threadedly fit with the height adjustment screw 31 is provided on the first connecting portion. A pair of first clamping blocks 9 is fixed on the linkage bracket 5, the first mounting portions at two ends of the first rotating block 8 are respectively located between the pair of first clamping blocks 9 and the linkage bracket 5, and rotational fit is performed both between the first mounting portion and the first clamping block 9 and between the first mounting portion and the linkage bracket 5 by using arc surfaces, thereby facilitating rotational mounting of the first rotating block 8, and a structure is simple. Specifically, as shown in FIG. 8, a protrusion 5-4 is disposed on the linkage plate 5-1, and the arc surface on the linkage bracket 5 is disposed on the protrusion 5-4.

An angle adjustment drive mechanism used to drive the tubular column connecting bracket 3 and the dashboard connecting bracket 4 to swing back and forth around the bolt 24 (a position at which the tubular column connecting bracket 3 is hingedly connected to the linkage bracket 5) is connected between the linkage bracket 5 and the dashboard connecting bracket 4. As shown in FIG. 1, FIG. 2, and FIG. 4, the angle adjustment drive mechanism includes an angle adjustment motor 12 hingedly connected to the dashboard connecting bracket 4 and an angle adjustment screw 13 driven by the angle adjustment motor 12 to rotate. A second mounting seat 29 is fixed on the dashboard connecting bracket 4, and the angle adjustment motor 12 is hingedly connected to the second mounting seat 29 by using a second pin 30. As shown in FIG. 8, a hinged base 5-5 is disposed at a middle portion of the linkage bracket 5 in a left-right direction and on a side facing away from the first rotating block 8. A rotatable second rotating block 6 is mounted on the hinged base 5-5. An angle adjustment screw 13 extends through the second rotating block 6 and is threadedly fit with the second rotating block 6. A rotating axis of the second rotating block 6 and a hinged axis (that is, an axis of the second pin 30) of the angle adjustment motor 12 both extend along a left-right direction.

A structure of the second rotating block 6 is the same as that of the first rotating block 8, and includes a second connecting portion and second mounting portions located at left and right ends of the second connecting portion. A second threaded hole threadedly fit with the angle adjustment screw 13 is provided on the second connecting portion. A pair of second clamping blocks 7 is fixed on the hinged base 5-5, the second mounting portions at two ends of the second rotating block 6 are respectively located between the pair of second clamping blocks 7 and the hinged base 5-5, and rotational fit is performed both between the second mounting portion and the second clamping block 7 and between the second mounting portion and the hinged base 5-5 by using arc surfaces, thereby facilitating rotational mounting of the second rotating block 6. A structure is simple.

In this application, there is only one angle adjustment screw 13, so the structure is relatively simple, and configuration costs can be reduced. In addition, the second rotating block 6 is located at the middle portion of the linkage bracket 5 in a left-right direction, that is, a connection position between the angle adjustment screw 13 and the linkage bracket 5 is located at the middle portion of the linkage bracket 5 in a left-right direction. The second mounting seat 29 is fixed to a middle portion of the dashboard connecting bracket 4 in a left-right direction, that is, a connection position between the angle adjustment motor 12 and the dashboard connecting bracket 4 is located at the middle portion of the dashboard connecting bracket 4 in a left-right direction. In this way, force exertion is relatively centered, and the dashboard connecting bracket 4 and the tubular column connecting bracket 3 can be more smoothly driven to swing back and forth.

Further, the connection position between the angle adjustment motor 12 and the dashboard connecting bracket 4 is located at a front portion of the dashboard connecting bracket 4, so that the connection position between the angle adjustment motor 12 and the dashboard connecting bracket 4 is far enough from an axis of the bolt 24, to increase a power arm for swinging the dashboard connecting bracket 4 and the tubular column connecting bracket 3 back and forth, so that the angle adjustment is more labor-saving. In this case, configuration costs of the angle adjustment drive mechanism can be reduced.

As shown in FIG. 1 to FIG. 5, the dashboard connecting bracket 4 includes a first bracket plate 4-1 and a second bracket plate 4-2 that are connected at an angle. The second bracket plate 4-2 is located on a rear side of the first bracket plate 4-1 and is fixed to the tubular column connecting bracket 3. A window extending up and down is disposed at a middle portion of the first bracket plate 4-1, a front side edge of the window is connected to a mounting plate 4-4 extending up, the second mounting seat 29 is fixed on the mounting plate 4-4, and the angle adjustment motor 12 spans two sides of the window. In this way, the connection position between the angle adjustment motor 12 and the dashboard connecting bracket 4 is relatively in a forward position, and disposition of the angle adjustment motor 12 is facilitated. In addition, the angle adjustment motor 12 does not occupy too much space in a height direction, so that a structure is relatively compact.

In addition, first bent plates 1-1 are respectively disposed on left and right sides of the substrate 1, and a static locking plate 11 is connected to each of the first bent plates 1-1. Dynamic locking plates 4-3 located between static locking plates 11 on two sides are disposed on left and right sides of the first bracket plate 4-1, and a pneumatic locking and supporting apparatus that can compress and fix the dynamic locking plate 4-3 on the static locking plate 11 on a corresponding side and release compression after ventilation is mounted on the dynamic locking plate 4-3 on each of the two sides. A working principle of the pneumatic locking and supporting apparatus is similar to that of an elastic pressing assembly of an air cylinder disclosed in the patent CN110466353B, and the pneumatic locking and supporting apparatus mainly includes a mounting shaft 15, an air cylinder 16, a first pushing socket 17, and a second pushing socket 20. The air cylinder 16 spans the two sides of the window. The mounting shaft 15 extends through the air cylinder 16, the dynamic locking plate 4-3, and the static locking plate 11, and two ends of the mounting shaft, which extend out from the static locking plate 11, are respectively sleeved with pads 18 and mounted with fixing nuts 19. The first pushing socket 17 is sleeved on the mounting shaft 15 and is located between one side of the air cylinder 16 and the dynamic locking plate 4-3. The second pushing socket 20 is sleeved on the mounting shaft 15 and is located between the other side of the air cylinder 16 and the dynamic locking plate 4-3. The second pushing socket 20 includes a thread segment, and an adjustment nut 21 and a locking nut 22 are mounted on the thread segment. A spring is disposed in the air cylinder 16. When air is not vented, the first pushing socket 17 and the adjustment nut 21 respectively press against the dynamic locking plates 4-3 on the two sides under the action of the spring, to compress and fix the dynamic locking plate 4-3 on the static locking plate 11. After the air is vented, compression performed by the first pushing socket 17 and the adjustment nut 21 is released, and the dashboard connecting bracket 4 can move relative to the substrate 1.

As shown in FIG. 1 and FIG. 3, a through hole through which the mounting shaft 15 extends, on the static locking plate 11, is a first slotted hole 11-1 extending up and down. There is a sufficient fit gap between the mounting shaft 15 and the first slotted hole 11-1, and the fit gap meets the requirement that the tubular column connecting bracket 3 and the dashboard connecting bracket 4 can swing back and forth around the bolt 24.

A working principle of the adjustment apparatus for a dashboard assembly in this application is as follows:

During use, when upper and lower heights of the directional tubular column and the dashboard need to be adjusted, first, ventilation to the air cylinder 16 is controlled, the dashboard connecting bracket 4 is unlocked, and the height adjustment motor 10 is turned on. The height adjustment motor 10 drives the height adjustment screw 31 to rotate, and the first rotating block 8 moves up and down along the height adjustment screw 31 under the action of a screw nut mechanism, to drive the linkage bracket 5, the tubular column connecting bracket 3, and the dashboard connecting bracket 4 to move up and down, thereby adjusting the heights of the directional tubular column and the dashboard. During the adjustment, the second slotted hole 2-2 on the guide plate 2-1 and the ball 26 between the linkage bracket 5 and the guide plate 2-1 guide up-and-down movement of the linkage bracket 5, the tubular column connecting bracket 3, and the dashboard connecting bracket 4. After the adjustment is performed in place, the height adjustment motor 10 stops operating, and at the same time, supply of air to the air cylinder 16 stops. The pneumatic locking and supporting apparatus compresses the dynamic locking plates 4-3 on the two sides, to fix positions of the directional tubular column and the dashboard.

When front and rear angles of the directional tubular column and the dashboard need to be adjusted, first, ventilation to the air cylinder 16 is controlled, the dashboard connecting bracket 4 is unlocked, and the angle adjustment motor 12 is turned on. The angle adjustment motor 12 drives the angle adjustment screw 13 to rotate, and the second rotating block 6 moves linearly along the angle adjustment screw 13 under the action of a screw nut mechanism, to pull or push the dashboard connecting bracket 4 and the tubular column connecting bracket 3 to swing back and forth around the bolt 24, thereby adjusting the angles of the directional tubular column and the dashboard. A fit gap between the mounting shaft 15 and the first slotted hole 11-1 can meet swinging travel requirements of the dashboard connecting bracket 4 and the tubular column connecting bracket 3. After the adjustment is performed in place, the angle adjustment motor 12 stops operating, and at the same time, supply of air to the air cylinder 16 stops. The pneumatic locking and supporting apparatus compresses the dynamic locking plates 4-3 on the two sides, to fix positions of the directional tubular column and the dashboard.

In other embodiments of the adjustment apparatus for a dashboard assembly, the guide socket may alternatively be a cylindrical socket, and an outer peripheral surface of the cylindrical socket is in direct contact with the hole wall of the slotted hole on the guide plate.

In other embodiments of the adjustment apparatus for a dashboard assembly, no guide socket may be disposed at an outside portion of the bolt in the hinged part, and in this case, the bolt is in direct contact with the hole wall of the slotted hole on the guide plate.

In other embodiments of the adjustment apparatus for a dashboard assembly, a pin may be selected as a hinged part. In this case, the pin is in direct contact with the hole wall of the slotted hole on the guide plate. To prevent the pin from falling off, cotter pins or clip springs need to be mounted at two ends of the pin.

In other embodiments of the adjustment apparatus for a dashboard assembly, regardless of whether the hinged part is a pin or a bolt, the hinged part may be in no contact with the hole wall of the slotted hole on the guide plate, but there is a gap. That is, no guiding is performed between the hinged part and the slotted hole. In this case, the linkage bracket is guided only by means of guiding fit structures between the left side surface of the linkage bracket and the left guide plate and between the right side surface of the linkage bracket and the right guide plate.

In other embodiments of the adjustment apparatus for a dashboard assembly, no protrusion may be disposed on a side surface of the guide plate, and the ball slot on the guide plate is directly disposed on a flat side surface of the guide plate.

In other embodiments of the adjustment apparatus for a dashboard assembly, no protrusion may be disposed on a side surface of the linkage bracket, and the ball slot on the linkage bracket is directly disposed on a flat side surface of the linkage bracket.

In other embodiments of the adjustment apparatus for a dashboard assembly, two balls may alternatively be disposed in the ball slots on the linkage bracket and the guide plate, and certainly, four or more balls may be disposed based on specific lengths of the ball slots. Certainly, in other embodiments, only one ball may be disposed. In this case, at least two ball slots need to be disposed on a single side, and one ball is disposed in each of opposite ball slots, to ensure that the linkage bracket can be guided.

In other embodiments of the adjustment apparatus for a dashboard assembly, the ball slots on the linkage bracket and the guide plate may have different slot depths, and also have different slot widths. For example, one ball slot is wider and deeper, and the other ball slot is narrower and shallower. In this case, a sum of slot depths of two ball slots is still equal to a diameter of balls, and slot widths of the ball slots are both fit with an embedded part of the balls. Therefore, the ball slot still has a guide function. However, in this case, to ensure that the ball can be loaded into a wider and deeper ball slot, a through slot needs to be processed in the linkage bracket or the guide plate. After the ball is loaded from one side of the through slot, a sealing plate is then mounted, to prevent the ball from falling out.

In other embodiments of the adjustment apparatus for a dashboard assembly, a rolling guiding fit structure may alternatively be that a wheel is mounted on a side surface of the linkage bracket, and a wheel slot for the wheel to move is provided on the guide plate. In this way, a guide effect can also be implemented, and friction force is relatively weak.

In other embodiments of the adjustment apparatus for a dashboard assembly, the guiding fit structure may alternatively be a sliding guiding fit structure. In this case, a sliding block is disposed on a side surface of one of the linkage bracket and the guide plate, and a sliding slot that is in guiding fit with the sliding block is disposed on a side surface of the other one of the linkage bracket and the guide plate.

In other embodiments of the adjustment apparatus for a dashboard assembly, the sliding guiding fit structure and the rolling guiding fit structure may alternatively be used in combination.

In other embodiments of the adjustment apparatus for a dashboard assembly, the linkage bracket is used as an integral component, and may include two linkage plates, namely, a left linkage plate and a linkage plate, and the two linkage plates are respectively located on outer sides of the two guide plates. In this case, the linkage bracket still has a left side surface disposed opposite to the left guide plate and a right side surface disposed opposite to the right guide plate. The guiding fit structures that perform guiding fit along an up-down direction are respectively disposed between the left side surface of the linkage bracket and the left guide plate and between the right side surface of the linkage bracket and the right guide plate. The guiding fit structures are the same as those in the foregoing embodiments.

An embodiment of a dashboard assembly in this application is as follows: The dashboard assembly includes a dashboard, a directional tubular column, and an adjustment apparatus configured to adjust heights and front and rear angles of the dashboard and the directional tubular column. The adjustment apparatus is the same as the adjustment apparatus for a dashboard assembly in any one of the foregoing embodiments, and details are not described herein again.

An embodiment of a vehicle in this application is as follows: The vehicle includes a vehicle body and a dashboard assembly mounted on the vehicle body. The dashboard assembly includes a dashboard, a directional tubular column, and an adjustment apparatus configured to adjust heights and front and rear angles of the dashboard and the directional tubular column. The adjustment apparatus is the same as the adjustment apparatus for a dashboard assembly in any one of the foregoing embodiments, and details are not described herein again.

The above are only the preferred embodiments of this disclosure and are not intended to limit this disclosure. The scope to be protected by the disclosure is subject to the claims. Any equivalent structural changes made using the content of the description and drawings of this disclosure are not intended to limit this disclosure, and should be included in the scope to be protected by the disclosure as well.

## Claims

1. An adjustment apparatus for a dashboard assembly, comprising a base fixed to a vehicle body, a connecting bracket connecting a dashboard and a directional tubular column, and a linkage bracket connected to the connecting bracket and moving up and down together with the connecting bracket, wherein the base comprises two guide plates, namely, a left guide plate and a right guide plate, the linkage bracket is hingedly connected to left and right sides of the connecting bracket by using a hinged part, the linkage bracket has a left side surface disposed opposite to the left guide plate and a right side surface disposed opposite to the right guide plate, and guiding fit structures that perform guiding fit along an up-down direction are respectively disposed between the left side surface of the linkage bracket and the left guide plate and between the right side surface of the linkage bracket and the right guide plate.

2. The adjustment apparatus for a dashboard assembly according to claim 1, wherein the guiding fit structure is a rolling guiding fit structure.

3. The adjustment apparatus for a dashboard assembly according to claim 2, wherein the rolling guiding fit structure comprises ball slots respectively disposed on the guide plate and the linkage bracket, and balls disposed in the ball slots.

4. The adjustment apparatus for a dashboard assembly according to claim 3, wherein slot depths of the ball slots on the linkage bracket and the guide plate are equal, and slot widths are also equal.

5. The adjustment apparatus for a dashboard assembly according to claim 3 or 4, wherein at least two balls are disposed in the ball slots on the linkage bracket and the guide plate.

6. The adjustment apparatus for a dashboard assembly according to any one of claims 1 to 4, wherein the hinged part comprises a bolt extending through the guide plate, the connecting bracket, and the linkage bracket, and a guide socket sleeved on an outer portion of the bolt, a through hole through which the bolt extends, on the guide plate, is a slotted hole extending up and down, and the guide socket is fit with a hole wall of the slotted hole in a contact manner.

7. The adjustment apparatus for a dashboard assembly according to claim 6, wherein the guide socket comprises a rectangular segment whose outer contour cross section is rectangular and a circular segment whose outer contour cross section is circular, the circular segment is connected to the rectangular segment, and two side surfaces that face away from each other and that are of the rectangular segment are fit with two opposite hole walls of the slotted hole in a contact manner; the connecting bracket comprises two connecting arms, namely, a left connecting arm and a right connecting arm, hingedly connected to the linkage bracket, the two connecting arms and the linkage bracket are all located between the two guide plates, a settlement slot whose slot width is greater than a width of the slotted hole is provided at an opening of the slotted hole on an outer side surface of the guide plate, and the circular segment is located in the settlement slot and is fit with a head of the bolt or a washer sleeved on the bolt in a stopping manner.

8. A dashboard assembly, comprising a dashboard, a directional tubular column, and an adjustment apparatus configured to adjust heights and front and rear angles of the dashboard and the directional tubular column, **characterized in that** the adjustment apparatus is the adjustment apparatus for a dashboard assembly according to any one of claims 1 to 7.

9. A vehicle, comprising a vehicle body and a dashboard assembly mounted on the vehicle body, the dashboard assembly comprises a dashboard, a directional tubular column, and an adjustment apparatus configured to adjust heights and front and rear angles of the dashboard and the directional tubular column, **characterized in that** the adjustment apparatus is the adjustment apparatus for a dashboard assembly according to any one of claims 1 to 7.
